# EUROPEAN PATENT APPLICATION

(11) **EP 2 131 273 A2**
(43) Date of publication of application: **09.12.2009**
(21) Application number: 09161882.7
(22) Date of filing: 03.06.2009
(51) Int. Cl.: G06F 3/048

(54) **System and method for adjusting a value using a touchscreen slider**

(30) Priority: 05.06.2008 US 133912
(71) Applicant: Honeywell International Inc., Morristown, NJ 07962 (US)
(72) Inventor: Triplett, David, Morristown, NJ 07962-2245 (US)
(74) Representative: Buckley, Guy Julian

(57) **Abstract**

Methods and apparatus are provided for controlling a touchscreen (104, 200) in an electronic system (100) and adjusting a value using a control element (400). A method is provided for controlling a touchscreen (104) adapted to sense object presence in a sensing region (206). The method comprises displaying a control element (400) having a reference point (404) on the touchscreen (104), and adjusting the value of a system property in response to detecting an object overlapping at least part of the control element (400). The value of the system property is adjusted at a rate based on the distance between the object and the reference point (404).

## Description

### TECHNICAL FIELD

The subject matter described herein relates generally to electronic displays, and more particularly, embodiments of the subject matter relate to methods and systems for adjusting a value using a slider displayed on a touchscreen.

### BACKGROUND

Electronic displays have replaced traditional mechanical gauges and utilize computerized or electronic displays to graphically convey information related to various electronic systems associated with the electronic display. Traditional electronic displays often interfaced with a user via mechanical controls, such as knobs, buttons, or sliders, in order to enable a user to control or adjust various system properties. For example, if the electronic display is associated with a radio system, a user may adjust the frequency channel or volume level by rotating or otherwise utilizing a corresponding knob.

Touchscreen technology enables many system designers to reduce the space requirements for an electronic display system by integrating or incorporating the mechanical control functionality into the display. Accordingly, electronic equivalents of the traditional mechanical controls have developed to allow a user to adjust system properties via the touchscreen interface. Most touchscreen controls mimic traditional mechanical controls and allow a user to adjust system properties in a linear manner, where the final value of the system property is determined based upon the total displacement of the control from an initial origin or reference point. However, in some situations, the linear adjustment methods are inadequate or impractical. For example, aviation communication systems operate over a frequency band from approximately 118 MHz to 136.975 MHz, with channels spaced by 8.33 kHz. Thus, there are over 2200 possible channel increments across the relevant frequency band. Linear adjustment mechanisms may require a significant amount of time to traverse the large range of values and locate the desired channel. Furthermore, in order to accommodate a large range of values, linear adjustment mechanisms, such as a traditional scrollbar, require a substantial amount of area on the display in order to allow a user to adjust values throughout the full spectrum while being able achieve the required resolution for selecting each individual desired channel.

### BRIEF SUMMARY

A method is provided for controlling a touchscreen adapted to sense object presence in a sensing region. The method comprises displaying on the touchscreen a control element having a reference point, and adjusting the value of a system property in response to detecting a sliding gesture overlapping at least part of the control element. The value of the system property is adjusted at a rate based on the distance between the sliding gesture and the reference point.

An apparatus is provided for an electronic system. The electronic system comprises a touchscreen having a control element displayed thereon. The control element has a reference point, and the touchscreen is adapted to sense object presence in a sensing region that overlaps at least part of the control element. A processor is coupled to the touchscreen, and is configured to adjust the value of a system property in response to the touchscreen sensing the presence of an object. The value of the system property is adjusted at a rate based on a distance between the object and the reference point.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of an electronic display system in accordance with one embodiment;

FIG. 2 is a schematic view of an exemplary touchscreen suitable for use in the electronic display system of FIG. 1 in accordance with one embodiment;

FIG. 3 is a flow diagram of an exemplary touchscreen control process in accordance with one embodiment;

FIG. 4 is a schematic view of an exemplary touchscreen suitable for use with the touchscreen control process of FIG. 3, showing an initial display state in accordance with one embodiment;

FIG. 5 is a schematic view of an exemplary touchscreen suitable for use with the touchscreen control process of FIG. 3, showing a display state in response to a sliding gesture indicating a desire to increase a value in accordance with one embodiment; and

FIG. 6 is a schematic view of an exemplary touchscreen suitable for use with the touchscreen control process of FIG. 3, showing a display state in response to a sliding gesture indicating a desire to decrease a value in accordance with one embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter.

For the sake of brevity, conventional techniques related to graphics and image processing, data transmission, touchscreen sensing, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate to systems and methods for adjusting the value of a system property using a control element, such as a slider, scrollbar, virtual knob, or the like, displayed on a touchscreen. Although not a requirement, the embodiment described herein employs a slider as a graphical touchscreen control element. The value may be adjusted at a rate that varies based upon the distance between an object sensed by the touchscreen and a reference point on the slider. This allows a slider to be able to accommodate a large range of values, and allow a user to traverse the range of values quickly, while still being able to perform fine tune adjustments to locate a specific value. Accordingly, the slider may be designed such that it can accommodate a large range of values while requiring less area on the touchscreen display than traditional controls.

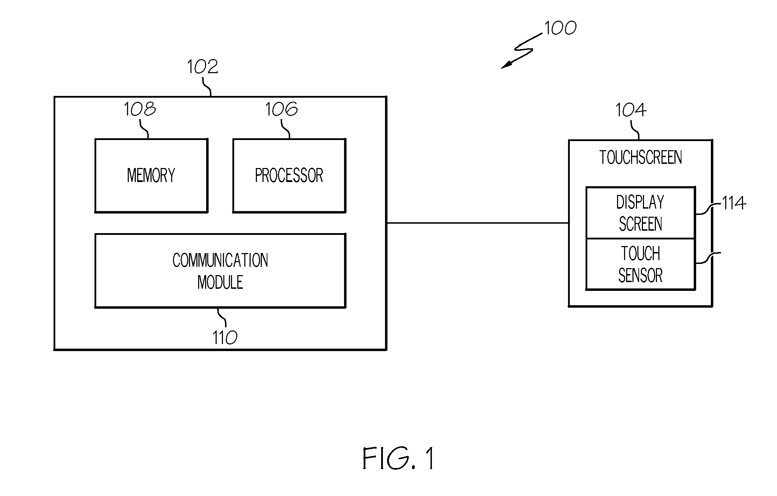

As shown in FIG. 1, an electronic system 100 may include, without limitation, a computing system 102 and a touchscreen 104. The computing system 102 may further include a processor 106, memory 108, and a communication module 110. In an exemplary embodiment, the touchscreen 104 is coupled to the computing system 102, which may be connected to one or more external systems via the communication module 110, as described below. In alternative embodiments, the touchscreen 104 may be an integral component of or integral with the computing system 102. The electronic system 100 may be used to receive information and/or data from an external system and provide the information to the touchscreen 104 for graphically conveying the information, and performing additional tasks and functions as described in greater detail below.

It should be understood that FIG. 1 is a simplified schematic representation of an electronic system 100, and is only one example of a suitable operating environment and is not intended to suggest any limitation as to the scope of use or functionality of any practical embodiment. Other well known electronic systems, environments, and/or configurations that may be suitable for use include, but are not limited to, personal computers, server computers, hand-held or laptop devices, personal digital assistants, mobile telephones, automotive head units, home entertainment head units, home entertainment systems, multiprocessor systems, microprocessor-based systems, programmable consumer electronics, network PCs, minicomputers, mainframe computers, distributed computing environments that include any of the above systems or devices, and the like.

In an exemplary embodiment, the computing system 102 and certain aspects of the exemplary embodiments may be described in the general context of computer-executable instructions, such as program modules, application code, or software executed by one or more computers or other devices. Generally, program modules include routines, programs, objects, components, data structures, and/or other elements that perform particular tasks or implement particular abstract data types. Typically, the functionality of the program modules may be combined or distributed as desired in various embodiments.

In an exemplary embodiment, the processor 106 may comprise all or part of one or more discrete components, integrated circuits, firmware code, and/or software code. The processor 106 may be configured to perform various functions or operations in conjunction with memory 108, as described below. For example, the processor 106 may include or cooperate with a graphics rendering engine or pipeline that is suitably configured to prepare and render images for display on the touchscreen 104. Depending on the embodiment, memory 108 may be volatile (such as RAM), non-volatile (such as ROM, flash memory, etc.) or some combination of the two. In an exemplary embodiment, the processor 106 is configured to receive electrical signals, information and/or data from the touchscreen 104, and in response perform additional tasks, functions, and/or methods, as described below. The processor 106 and/or computing system 102 may have additional features and/or functionality not described in detail herein, as will be appreciated in the art.

In an exemplary embodiment, the communication module 110 is configured to allow the computing system 102 to communicate and/or interface with other external devices or systems, such as radios, receivers, communications systems, navigation systems, monitoring systems, sensing systems (e.g., radar or sonar), avionics systems, and/or other suitable systems. The communication module 110 may include, without limitation, suitably configured interfaces that allow computing system 102 to communicate with a network such as the Internet, external databases, external memory devices, and the like. The communication module 110 may also include suitably configured hardware interfaces, such as buses, cables, interconnects, I/O devices, and the like. In alternative embodiments, the electronic system 100 may be integral with one or more external systems, and the communication module 110 may or may not be present.

In an exemplary embodiment, the touchscreen 104 includes, without limitation, a touch sensor 112 and a display screen 114. The touchscreen 104 is communicatively coupled to the computing system 102, and the computing system 102 and the touchscreen 104 are cooperatively configured to generate an output on the display screen 114. Depending on the embodiment, the output on the display screen may be indicative of one or more external system(s) coupled to or associated with the electronic system 100 and/or the internal processes of the computing system 102. In an exemplary embodiment, the touch sensor 112 is coupled to the display screen 114, and is configured to receive and/or sense an input, as is known in the art and described below. The touch sensor 112 may be physically adjacent to (e.g., directly behind) the display screen 114 or integral with the display screen 114. The touch sensor 112 may include or incorporate capacitive, resistive, inductive, or other comparable sensing technologies.

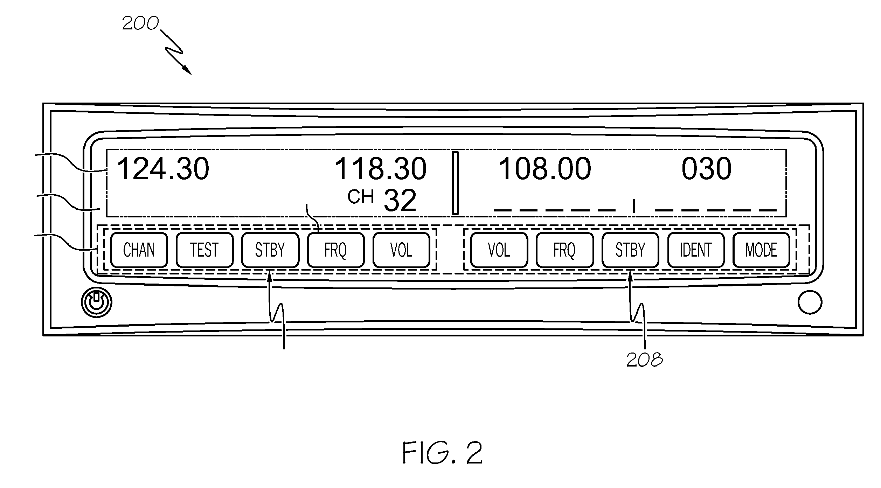

Referring now to FIG. 2, in an exemplary embodiment, a touchscreen 200 includes a display screen 202 having a display region 204 and a sensing region 206. In an exemplary embodiment, the sensing region 206 encompasses a plurality of selectable items 208, 210 displayed on the display screen 202. In an exemplary embodiment, at least one selectable item 210 corresponds to (or is associated with) a system property of an electronic system (e.g., a radio system, communication system, navigation system, or the like) coupled to the touchscreen 200. For example, as shown in FIG. 2 the selectable item 210 corresponds to frequency. It should be understood that in practical embodiments, the selectable item 210 or one or more of the plurality of selectable items 208 may correspond to the communication channel, navigation channel, volume, or another adjustable system property. The touchscreen 200 may be configured to adjust and/or initiate adjustment of a value of the system property corresponding to the selectable item 210, as described in greater detail below.

Referring again to FIG. 1 and FIG. 2, in an exemplary embodiment, the touch sensor 112 is configured to sense or detect the presence of an object (e.g., a human finger, a pointer, a pen, or another suitable selection mechanism) in one or more sensing regions 206 (e.g., input) on the display screen 114, 202. The touch sensor 112 may be configured to sense or detect an object presence, which may include direct physical contact (e.g., pressure applied), physical proximity and/or indirect contact (e.g., magnetic field, electric field, thermal sensitivity, capacitance). As used herein, the sensing region 206 should be understood as broadly encompassing any space on the display screen 114, 202 where the touch sensor 112 is able, if in operation, to sense or detect an input object and/or object presence. In an exemplary embodiment, the sensing region 206 extends from the surface of the display screen 114, 202 in one or more directions for a distance into space until signal-to-noise ratios prevent object detection. This distance may vary depending on the type of sensing technology used, design of touch sensor interface, characteristics of the object(s) sensed, the operating conditions, and the accuracy desired.

In an exemplary embodiment, the touchscreen 104, 200 is adapted to sense an object (e.g., object presence) overlapping a selectable item 208, 210 or control element displayed on the display screen 114, 202 within the sensing region 206 as described below. As used herein, a selection gesture corresponds to the presence of an object that overlaps at least part of a selectable item. A sliding gesture corresponds to the presence of an object that overlaps at least part of a control element. In an exemplary embodiment, the sliding gesture may be fixed in position or vary in position relative to the touchscreen 104, 200. In accordance with one embodiment, the touchscreen 104, 200 may be adapted to detect or distinguish object motion (e.g., sliding, rotating, or otherwise varying the object position) that overlaps at least part of a control element.

In an exemplary embodiment, the touch sensor 112 is calibrated, configured, and/or otherwise adapted to respond to an input object (e.g., object presence) in the sensing region 206 of the display screen 114, 202. In an exemplary embodiment, the touchscreen 104, 200 is configured to provide the positional information and/or other data indicative of the input obtained by the touch sensor 112 to the computing system 102 and/or processor 106, which may be configured to process the information as described in greater detail below.

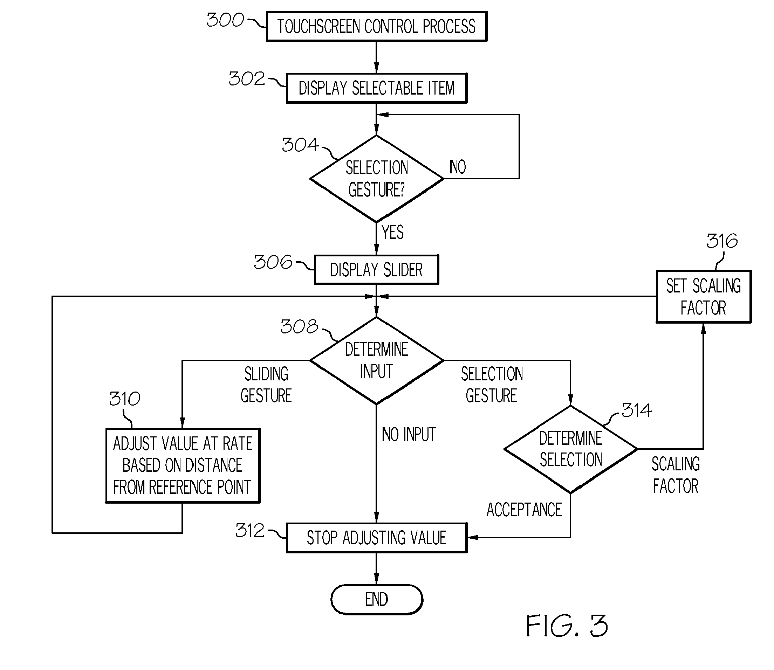

Referring now to FIG. 3, in an exemplary embodiment, an electronic system 100 may be configured to perform a touchscreen control process 300 and additional tasks, functions, and/or operations as described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the computing system 102, the processor 106 or the touchscreen 104, 200. It should be appreciated any number of additional or alternative tasks may be included, and may be incorporated into a more comprehensive procedure or process having additional functionality not described in detail herein.

Referring again to FIG. 3, and with continued reference to FIG. 1 and FIG. 2, a touchscreen control process 300 may initialize when an electronic system 100 is started, turned on, or otherwise initialized. In an exemplary embodiment, the touchscreen control process 300 is configured to display a selectable item 210 on a display screen (task 302). The selectable item 210 is collocated with, rendered in, and/or overlaps the sensing region 206, such that the touchscreen 104, 200 is adapted to sense object presence in the area on the display screen 202 occupied by the selectable item 210. In practice, the touchscreen control process 300 may be configured to display a plurality of selectable items (for example, as shown in FIG. 2), however, for purposes of explanation, the touchscreen control process 300 will be described herein in the context of an individual selectable item 210. In an exemplary embodiment, the selectable item 210 corresponds to a system property (e.g., volume, frequency, channel, etc.) and has a variable or adjustable value, which may be stored or maintained in memory 108 and/or displayed in the display region 204.

In an exemplary embodiment, the touchscreen control process 300 may be configured to maintain a substantially fixed and/or static display until sensing or detecting a selection gesture (e.g., object presence) that overlaps at least part of the selectable item 210 (task 304). The selection gesture may indicate a desire to adjust the value of the system property corresponding to the selectable item 210 (e.g., frequency), on behalf of a user of the electronic system. For purposes of explanation, the system property corresponding to the selected item 210 may be referred to herein as the selected system property.

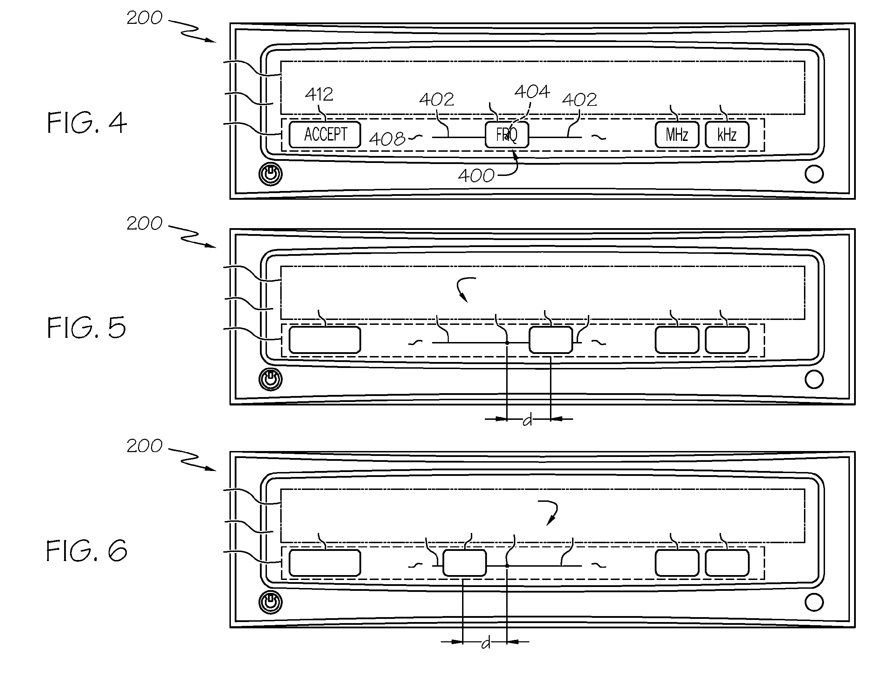

Referring now to FIG. 3 and FIG. 4, in an exemplary embodiment, the touchscreen control process 300 is configured to display a control element on the display screen 202 in response to the selection gesture (task 306). The control element is collocated with, rendered in, and/or overlaps the sensing region 206, such that the touchscreen 104, 200 is adapted to sense object presence in the area on the display screen 202 occupied by the control element. It should be noted that the progression from FIG. 2 to FIG. 4 is a graphical representation of one possible implementation of task 306. Depending on the embodiment, the touchscreen control process 300 may be configured to display the control element while the object (or selection gesture) remains present, or the touchscreen control process 300 may be configured to wait and display the control element only after the object presence is no longer sensed (e.g., selection gesture is released).

In an exemplary embodiment, the control element is a slider 400 including a path 402 having a reference point 404, an increase indicator 406, and a decrease indicator 408. The slider 400 may also include an indicator bar 410, which may be initially displayed, oriented about, and/or centered on the reference point 404. There are numerous possible locations for the reference point 404 (e.g., on either end of the path 402, the center of the display screen, the edge of the display screen), and in some embodiments, the reference point 404 may not be displayed or omitted entirely. In an exemplary embodiment, the path 402 is centered on the reference point 404, and the increase indicator 406 and decrease indicator 408 are located (or displayed) at opposing ends of the path 402.

In an exemplary embodiment, the slider 400 and/or path 402 has a length on the order of a few inches, approximately one and a half to two inches, in order to allow a user to achieve a desired resolution when adjusting values as described below, although the length may vary depending on system requirements. In an exemplary embodiment, the slider 400 occupies less than one half of the display screen 202, with a length ranging from approximately one-quarter to one-third of the length of the display screen 202. It should be appreciated that a slider 400 is merely one possible implementation of the touchscreen control process 300, and other control elements, such as a knob or scrollbar, may be used in other embodiments.

In accordance with one embodiment, the touchscreen control process 300 is configured to remove, hide, mask, replace or otherwise disable the selectable item 210 (and any other selectable items 208) displayed on the display screen 202. In an exemplary embodiment, the slider 400 replaces the selectable item 210, such that the reference point 404 has the same location as and/or corresponds to the location of the selectable item 210 on the display screen 200, and the selectable item 210 or corresponds to the indicator bar 410. In this embodiment, the user will not visually distinguish between the selectable item 210 and the indicator bar 410 based on appearance, and may perceive the display as if the selectable item 210 becomes the indicator bar 410, as shown in FIG. 2 and FIG. 4. However, the user may distinguish between the indicator bar 410 and the selectable item 210 based on their respective functionality, as described herein.

In an exemplary embodiment, the touchscreen control process 300 may be configured to display additional selectable items in response to the initial selection gesture to enable additional functionality described in greater detail below. For example, the touchscreen control process 300 may display an acceptance button 412 and one or more scaling factor buttons 414, 416. The acceptance button 412 and scaling factor buttons 414, 416 are collocated with and/or overlap the sensing region 206, such that the touchscreen 104, 200 is adapted to sense object presence in the area on the display screen 202 occupied by the acceptance button 412 and scaling factor buttons 414, 416. The touchscreen control process 300 may be adapted to detect a subsequent selection gesture that overlaps at least part of the acceptance button 412 and/or scaling factor buttons 414, 416, as discussed in greater detail below.

Referring now to FIGS. 3-6, the touchscreen control process 300 may be configured to determine the nature of the input (e.g., object presence) while the control element is displayed on the display screen (task 308). In an exemplary embodiment, the touchscreen control process 300 is configured to respond to a sliding gesture that overlaps at least part of the indicator bar 410. Alternatively, the touchscreen control process 300 may respond to a sliding gesture that overlaps a part of the path 402 and/or slider 400. The touchscreen control process 300 is configured to adjust the value of the selected system property in response to the sliding gesture (task 310). In an exemplary embodiment, the touchscreen control process 300 is configured to adjust the value of the selected system property at a rate based on the distance (*d*) between the sliding gesture (e.g., object presence) and the reference point 404. For example, the processor 106 may be configured to increase the value of the selected system property if the sliding gesture is in a first direction relative to the reference point 404 (e.g., towards the increase indicator 406) or decrease the value if the sliding gesture is in a second direction relative to the reference point 404 (e.g., towards the decrease indicator 408). In an exemplary embodiment, the distance (*d*) is measured relative to (or along) the path 402 as shown. Depending on the embodiment and the specific application, the relationship between the rate of adjustment and the distance may vary. For example, the rate may vary exponentially, quadratically, linearly, or logarithmically with respect to distance.

In accordance with one embodiment, the touchscreen control process 300 is configured to provide the adjusted value as it is being adjusted to the electrical system and/or external system corresponding to the selected property and/or selectable item 210 in real-time. The touchscreen control process 300 may also be configured to update the display such that the indicator bar 410 tracks the sliding gesture (e.g., object presence) on the display screen 202 and/or sensing region 206, as shown in FIG. 5 and FIG. 6. Although not shown, the touchscreen control process 300 may also be configured to refresh and/or update the display region 204 to reflect the adjusted value or otherwise convey the nature of the adjustment to a user. The loop defined by task 308 and task 310 may repeat as long as a sliding gesture is detected in the portion of the sensing region 206 collocated with and/or overlapping the slider 400.

In an exemplary embodiment, the touchscreen control process 300 is configured to stop adjusting the value of the selected system property and set the adjusted value as the current (or new value) for the selected system property if no object presence is sensed or detected for a period of time (task 312). Depending on the embodiment, the period of time may vary between zero seconds to a specified time, although, in an exemplary embodiment the period of time is chosen to be between two and three seconds for ergonomic purposes. For example, the processor 106 may be configured to stop adjusting the value of the selected system property when the object presence is no longer sensed by the touchscreen 104, 200. After a period of time, the processor 106 may be configured to store the adjusted value in memory 108 such that it corresponds to the selected system property and/or provide the adjusted value to an external system via communication module 110. In an exemplary embodiment, the touchscreen control process 300 may be configured to remove, hide, mask, or otherwise disable the control element to restore the display to an initial or fixed state (e.g., the state shown in FIG. 2). In accordance with one embodiment, the indicator bar 410 returns to the reference point 404 (e.g., the state shown in FIG. 4) when an object presence is not sensed or detected.

In accordance with one embodiment, the touchscreen control process 300 may be configured to respond to a selection gesture while the slider 400 is displayed on the display screen 202 (task 308). In an exemplary embodiment, the touchscreen control process 300 is configured to determine the selection made by the selection gesture (task 314). In accordance with one embodiment, if the selection gesture corresponds to an object presence that overlaps at least part of a scaling factor button 414, 416, the touchscreen control process 300 is configured to set a scaling factor for the control element (task 316). The touchscreen control process 300 may be initially configured such that value is adjusted at a default or base rate. For example, in one embodiment, the touchscreen control process 300 may be configured to adjust a frequency value (e.g., the selected system property) at a default or base rate corresponding to a kilohertz (kHz) scale. If the touchscreen control process 300 detects a selection gesture corresponding to a megahertz (MHz) scale (e.g., scaling factor button 414), the processor 106 may be configured to adjust or multiply the default or base rate by a scaling factor of one thousand. It should be understood that there are various possible implementations for the default or base rate and possible scaling factors, and an exhaustive list possible combinations will not be recited herein.

In an exemplary embodiment, if the selection gesture or object presence overlaps at least part of the acceptance button 412, the touchscreen control process 300 is configured to stop adjusting the value of the selected system property and set the adjusted value as the new (or current value) for the selected system property (task 312), as described above. It should be appreciated that there are numerous other possible selections, and that the acceptance button 412 and scaling factor buttons 414, 416 are merely two possible modifications suitable for the touchscreen control process 300. In practical embodiments, there may be numerous possible combinations of selections and modifications, depending on the needs of a given electronic system.

One advantage of the system and/or method described above is that the control element may be used to adjust a value across a large numerical range while at the same time achieving a desirable resolution to allow a user finely adjust the value. At the same time, the control element requires less space and/or area on the touchscreen when compared to conventional controls. For example, aviation communication systems operate over a frequency band from approximately 118 MHz to 136.975 MHz, with channels spaced by 8.33 kHz. Thus, there are over 2200 possible channel increments across the relevant frequency band. Conventional control elements require substantial space and/or area on the touchscreen to not only accommodate this large range of values, but also allow a user to quickly traverse the range also achieving the resolution to be able to select any individual channel out of the 2200 channels. Accordingly, the subject matter described herein provides a control element (e.g., slider) that requires a smaller percentage of the total display area and allows for additional items or features and an otherwise robust display during a touchscreen adjustment process.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for controlling a touchscreen (200) adapted to sense object presence in a sensing region (206), the method comprising:
displaying on the touchscreen (200) a control element (400) having a reference point (404); and
adjusting a value of a system property in response to a sliding gesture overlapping at least part of the control element (400), wherein the value of the system property is adjusted at a rate based on a distance between the sliding gesture and the reference point (404).

2. The method of claim 1, wherein displaying the control element (400) further comprises:
detecting a selection gesture, the selection gesture overlapping at least part of a selectable item (208) displayed on the touchscreen (104), the selectable item (208) corresponding to the system property; and
displaying the control element (400) in response to the selection gesture.

3. The method of claim 2, wherein the control element (400) comprises a slider (400), wherein displaying the control element (400) comprises displaying the slider (400) in place of the selectable item (208).

4. The method of claim 1, further comprising storing the value of the system property in response to a second selection gesture overlapping a second selectable item (208).

5. The method of claim 1, further comprising adjusting the rate in response to a second selection gesture overlapping a second selectable item (208), the second selectable item (208) corresponding to a scaling factor.

6. The method of claim 1, further comprising storing the value of the system property if the sliding gesture is not detected for a period of time.

7. The method of claim 1, wherein adjusting the value of the system property further comprises:
increasing the value of the system property if the sliding gesture is in a first direction (406) relative to the reference point (404); and
decreasing the value of the system property if the sliding gesture is in a second direction (408) relative to the reference point (404).

8. An electronic system (100) comprising:
a touchscreen (104, 200) having a control element (400) displayed thereon, the control element (400) having a reference point (404), the touchscreen (104, 200) being adapted to sense object presence in a sensing region (206), wherein the sensing region (206) overlaps at least part of the control element (400); and
a processor (106) coupled to the touchscreen (104, 200), wherein the processor (106) is configured to adjust a value of a system property, in response to the touchscreen (104, 200) sensing presence of an object, wherein the value of the system property is adjusted at a rate based on a distance between the object and the reference point (404).

9. The electronic system (100) of claim 8, wherein the processor (106) is configured to:
increase the value of the system property if the object is in a first direction (406) relative to the reference point (404); and
decrease the value of the system property if the object is in a second direction (408) relative to the reference point (404).

10. The electronic system (100) of claim 8, the control element (400) having a path (402), wherein the distance between the object and the reference point (404) is measured relative to the path (402).
